# EUROPÄISCHE PATENTSCHRIFT

(11) **EP 2 269 263 B1**
(45) Veröffentlichungstag und Bekanntmachung des Hinweises auf die Patenterteilung: **16.01.2013**
(21) Anmeldenummer: 09728952.4
(22) Anmeldetag: 28.03.2009
(51) Int. Cl.: H01M 10/44, H01M 10/48, A47L 9/28

(54) **ELEKTRISCHES GERÄT MIT ELEKTROMOTOR UND AKKUMULATORPAKET**
ELECTRIC DEVICE HAVING AN ELECTRIC MOTOR AND STORAGE BATTERY PACK
APPAREIL ÉLECTRIQUE AVEC MOTEUR ÉLECTRIQUE ET BATTERIE D'ACCUMULATEURS

(30) Priorität: 02.04.2008 DE 102008017092
(43) Veröffentlichungstag der Anmeldung: 05.01.2011
(73) Patentinhaber: Miele & Cie. KG, 33332 Gütersloh (DE)
(72) Erfinder: LIEBIG, Oliver, 33611 Bielefeld (DE); WEGENER, Dirk, 33649 Bielefeld (DE)
(86) Internationale Anmeldenummer: PCT/EP2009/002285
(87) Internationale Veröffentlichungsnummer: WO 2009/121532

(56) Entgegenhaltungen:
- EP-A- 0 593 869
- WO-A-2007/073864
- DE-B3-102005 010 124
- DE-U1-202006 008 476

## Beschreibung

Die Erfindung betrifft ein elektrisches Gerät, insbesondere einen Bodenstaubsauger, mit einem Gehäuse, in dem ein Elektromotor und ein aus mehreren Akkumulatorzellen bestehendes Akkumulatorpaket zu dessen Bestromung angeordnet ist, wobei die Bestromung mit einer Betriebsspannung von mehr als 42 Volt erfolgt, und wobei eine Steckereinrichtung zur elektrischen Kontaktierung des Akkumulatorpakets mit dem Elektromotor vorgesehen ist.

Ein solches Gerät ist beispielsweise durch die WO 2007/073864 A2 bekannt. Die DE 20 2006 008 476 U1 offenbart eine Energieversorgung, welche aus mehreren wiederaufladbaren Akkupacks besteht. Diese Akkupacks werden zum Entladen mittels einer Steckverbindung seriell verbunden.

Herkömmliche Elektrogeräte, die durch einen Akkumulator bestromt werden, sind in der Regel für eine Betriebsspannung unter 42 Volt ausgelegt. Dieser Wert entspricht der Sicherheitskleinspannungsgrenze nach VDE 0700. Es gibt Anwendungsfälle, in denen mit einer solchen Betriebsspannung nicht die gewünschte Leistung erreichbar ist, insbesondere wenn die Strombelastung limitiert ist. Als Beispiel seien hier die in der o. g. Patentanmeldung beschriebenen Staubsauger genannt, die sowohl im Netzspannungsbetrieb als auch im Akkubetrieb eine zufriedenstellende Saugleistung erreichen sollen. Es müssen also eine Anzahl von Akkumulatorzellen verwendet werden, die insgesamt eine Betriebsspannung von mehr als 42 Volt erzeugen, vorzugsweise sollte diese Spannung im Bereich um 100 Volt liegen.

Da ein Personenkontakt zu einer solchen Spannung sowohl bei der Fertigung als auch bei der Handhabung des Geräts vermieden werden muss, kann diesen Personen nicht das von Geräten mit Kleinspannungsverbrauchern (Taschenlampen, Fernsteuerungen etc.) bekannte Handling zugemutet werden. Dort werden die notwendigen Akkumulatorzellen einzeln in einen Aufnahmeraum des Geräts gelegt und über vorhandene Brücken wird dann die elektrische Verbindung der Zellen vorgenommen. Bei einem solchen Vorgehen würde mit jeder eingelegten Zelle die Spannung, mit der der Bediener in Berührung kommen kann, steigen. Auch sogenannte Akkupacks, d. h. mehrere bereits untereinander kontaktierte Zellen in einem festen, unzugänglichen Akkumulatorgehäuse bieten hier keine Lösung, da die zur Kontaktierung des Akkumulatorpakets mit dem Elektromotor notwendigen Steckverbindungen immer noch ein Gefahrenpotential bilden.

Der Erfindung stellt sich somit das Problem, bei einem elektrischen Gerät der eingangs genannten Art sowohl den Bediener als auch mit der Gerätemontage befasste Personen vor dem Kontakt mit spannungsführenden Teilen zu schützen, an denen mehr als die Sicherheitskleinspannung von 42 Volt anliegt.

Erfindungsgemäß wird dieses Problem durch ein elektrisches Gerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass auf einfache Weise ein Kontakt mit einer Spannung von mehr als 42 Volt vermieden wird. Dies erfolgt dadurch, dass die Akkumulatorzellen derart miteinander elektrisch kontaktiert sind, dass mindestens zwei Zellengruppen mit einer Zellspannung von weniger als 42 Volt entstehen, und dass die Steckereinrichtung eine Brückenschaltung beinhaltet, welche beim Herstellen der Kontaktierung des Akkumulatorpakets mit dem Elektromotor die Zellgruppen derart miteinander elektrisch kontaktiert, dass diese die Betriebsspannung von mehr als 42 Volt abgeben.

Dabei ist es zweckmäßig, wenn die Brückenschaltung in ein nicht am Akkumulatorpaket angeordnetes Teil der Steckereinrichtung integriert ist.

Außerdem ist es zweckmäßig, wenn die Akkumulatorzellen von einem Akkumulatorgehäuse aufgenommen werden, an dem ein Stecker oder ein Steckergehäuse als Teil der Steckereinrichtung angeordnet ist. Um das Akkumulatorpaket vor Überhitzung zu schützen, ist in dem Akkumulatorgehäuse ein Temperatursensor angeordnet, dessen Anschlussleitungen an Anschlusskontakte am Stecker oder am Steckergehäuse geführt sind. Dabei ist es zweckmäßig, wenn der Temperatursensor in einem Bereich des Akkumulatorgehäuses angeordnet ist, welcher dem Elektromotor am nächsten ist.

Für Lithiumionen-Akkumulatorzellen gibt es eine Gefahrgutvorschrift der UN3090-Transportvorschrift. Danach darf der Lithiumgehalt bei einer Einzelzelle nicht größer als zwei Gramm sein, der Gesamt-Lithiumgehalt bei einem Akkumulatorpaket nicht größer als acht Gramm. Diese Vorschrift wird durch eine räumliche und/oder elektrische Trennung einzelner Zellgruppen erreicht, und zwar dadurch, dass an dem Akkumulatorgehäuse ein Schalter angeordnet ist, mit dem sowohl die elektrische Kontaktierung des Akkumulatorpakets mit dem Elektromotor als auch die elektrische Kontaktierung von zwei Zellgruppen untereinander trennbar ist und/oder dass die einzelnen Zellengruppen innerhalb des Akkumulatorgehäuses durch Zwischenwände voneinander getrennt sind.

Ein Ausführungsbeispiel der Erfindung ist in den Zeichnungen rein schematisch dargestellt und wird nachfolgend näher beschrieben. Es zeigt
- Figur 1: eine perspektivische Darstellung eines Staubsauger-Gehäuseunterteils mit einem Aufnahmefach für ein Akkumulatorpaket,
- Figuren 2 bis 4: das Akkumulatorpaket mit geöffnetem und geschlossenem Gehäuse in verschiedenen Ansichten,
- Figur 5: eine schematische Darstellung des Akkumulatorpakets
- Figur 6: die Schaltskizze des Akkumulatorpakets und der Steckereinrichtung,
- Figur 7: das Aufnahmefach des Staubsaugers bei entferntem Akkumulatorpaket.

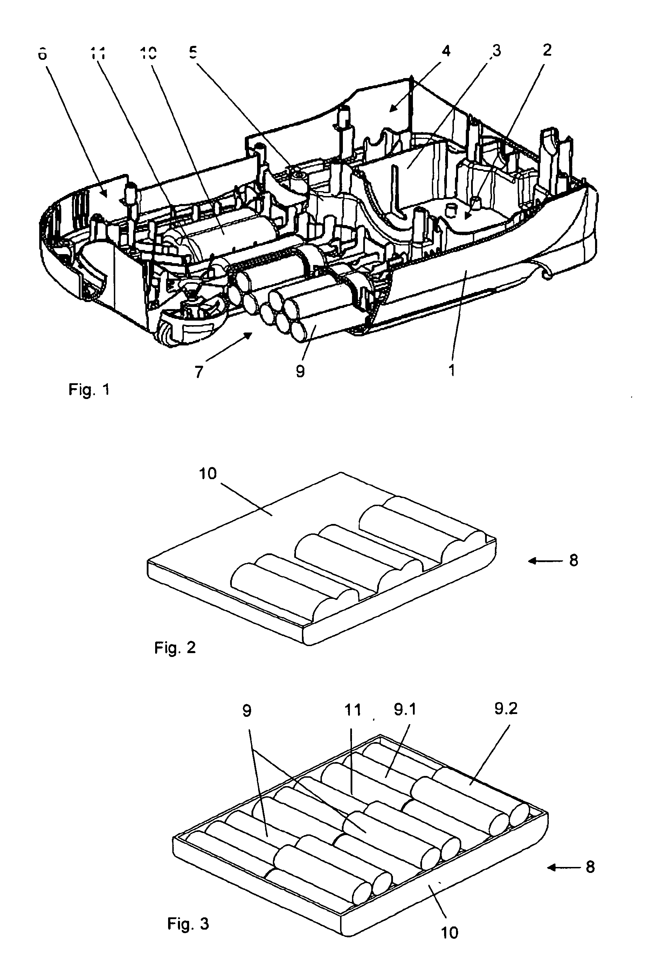

Im Folgenden ist ein erfindungsgemäß aufgebautets elektrisches Gerät anhand eines Staubsaugers beschrieben. Der Gesamtaufbau eines solchen Staubsaugers ist aus der eingangs genannten deutschen Patentanmeldung 102006058613.1 hinreichend bekannt und ist deshalb in den Figuren nicht dargstellt. Die Figur 1 zeigt deshalb nur das Gehäuseunterteil 1 des Staubsaugers. Dieser besitzt ein in den Zeichnungen nicht dargestelltes Sauggebläse, welches über einen ebenfalls nicht dargestellten Elektromotor angetrieben wird. Das Gebläse und der Motor sind in einem Motorgebläseraum 2 angeordnet, der durch eine erste Trennwand von einem Raum 4 zur Aufnahme einer nicht dargestellten Kabeltrommel und durch eine zweite Trennwand 5 von einem Staubsammelraum 6 abgeteilt wird. In dem Staubsammelraum 6 kann in bekannter Weise ein nicht dargestellter Staubabscheider angeordnet sein, entweder ein Staubbeutel, ein Filter oder ein Behälter, der durch seine Struktur als Fliehkraft-, Massenträgheits- oder sonstiger Abscheider wirkt.

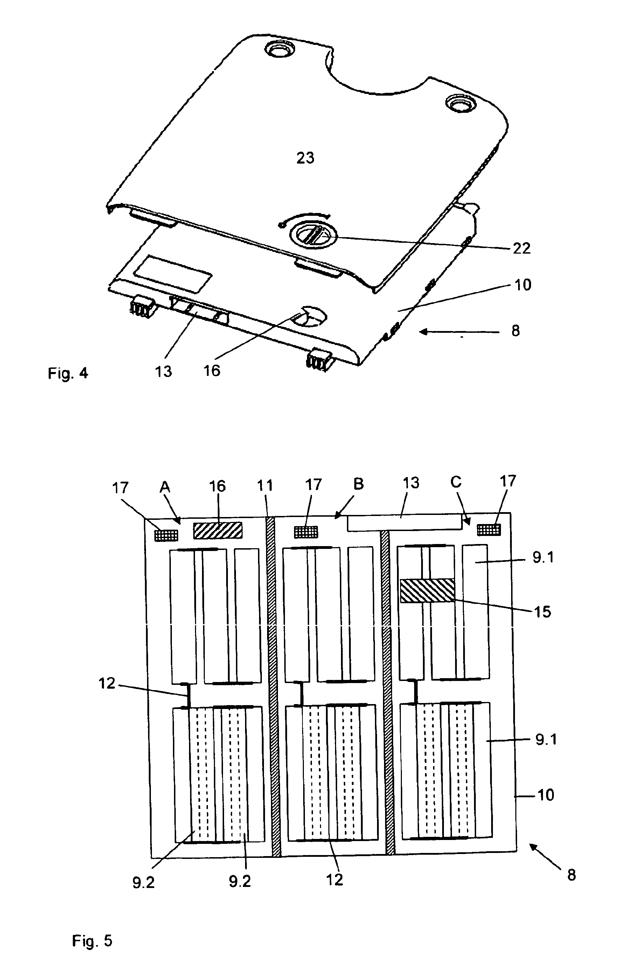

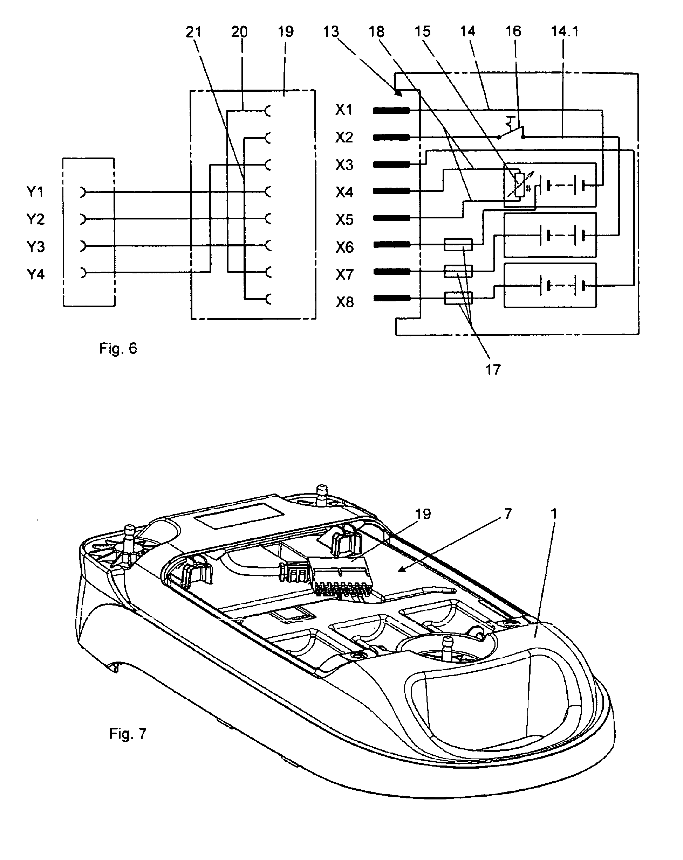

In einer Ebene unterhalb des Motorgebläseraums 2 und unterhalb des Staubsammelraums 6 ist in einem Aufnahmefach 7 (siehe auch Figur 7) ein in den Figuren 2 bis 5 dargestelltes Akkumulatorpaket 8 angeordnet, mit dem der Staubsauger unabhängig vom Stromnetz betrieben werden kann. Damit das Gebläse auch bei dieser Betriebsart eine ausreichende Saugleistung erzeugt, ist in dem Akkumulatorpaket 8 eine Vielzahl von einzelnen Akkumulatorzellen 9 angeordnet. Im gezeigten Beispiel sind dies insgesamt 24 Zellen mit einer Einzelspannung von maximal 4,2 Volt, so dass bei einer Reihenschaltung dieser Zellen 9 eine Gesamtspannung von maximal 100,8 Volt erreicht wird. Die Zellen 9 werden von einem Akkumulatorgehäuse 10 aufgenommen. Dabei werden jeweils acht Zellen 9 zu einer Zellengruppe zusammengefasst, die von den anderen Gruppen räumlich und elektrisch getrennt ist. Figur 5 zeigt schematisch die einzelnen Zellengruppen A, B und C, bei denen in einer unteren Schicht zweimal drei Zellen 9.1 arrangiert sind und in einer oberen Schicht nochmals zwei Zellen 9 auf die vorderen drei Zellen 9 der unteren Schicht gepackt werden (siehe auch Figur 3). Das Akkumulatorpaket 8 ist im Staubsauger so untergebracht, dass der Bereich mit den übereinander gepackten Zellen 9 direkt unter dem Staubraum 6 und demzufolge in einem gut belüfteten Bereich platziert ist, siehe auch Figur 1. Der Bereich, in dem nur eine untere Schicht vorhanden ist, erstreckt sich bis unter den Motorgebläseraum 2. Die Zellengruppen A bis C sind durch Zwischenwände 11 räumlich getrennt, die in den Figuren 1 und 3 erkennbar und in Figur 5 schematisch angedeutet sind. Die elektrische Trennung der Zellengruppen A bis C erfolgt durch eine besondere Maßnahme: Die acht Zellen 9 in einer Zellengruppe A bis C sind jeweils miteinander elektrisch kontaktiert, so dass jede der drei Zellengruppen A bis C eine Zellenspannung von 33,6 Volt erreicht. Die elektrische Kontaktierung der einzelnen Zellen 9 zur Bildung der Zellengruppen A bis C erfolgt intern innerhalb des Akkumulatorgehäuses 10 über eine in Figur 5 nur schematisch angedeutete, ansonsten nicht weiter dargestellte Verschweißung mit elektrisch leitenden Blechen 12. Die Zellengruppen A bis C sind aber nicht innerhalb des Akkumulatorpakets 8 miteinander leitend verbunden. Deren einzelne Anschlussleitungen 14 sind getrennt an Kontakte einer in den Figuren 4 und 5 erkennbaren Steckeraufnahme 13 geführt. Dies ist auch aus der in Figur 6 dargestellten Schaltskizze ersichtlich, in der die einzelnen Anschlusskontakte mit X1 bis X8 bezeichnet sind. Die negativen Pole der Zellengruppen A bis C belegen die Kontakte X1 bis X3, die positiven Pole die Kontakte X6 bis X8. Figuren 5 und 6 zeigen, dass in dem Akkumulatorgehäuse 10 außerdem ein NTC-Widerstand 15, ein Schalter 16 und drei Schmelzsicherungen 17 angeordnet sind. Der NTC-Widerstand 15 dient zur Erfassung der Temperatur im Akkumulatorpaket 8. Er befindet sich in der Zellengruppe C im Bereich der Zellen 9, die direkt unter dem Motorgebläseraum 2 angeordnet sind. Dort werden die höchsten Temperaturen erwartet. Die Anschlussleitungen 18 des NTC's 15 werden an die Anschlusskontakte X4 und X5 geführt. Die Schmelzsicherungen 17 verhindern einen dauerhaften Kurzschluss in einer der Zellengruppen A bis C. Die Funktion des Schalters 16 in der Leitung 14.1 vom negativen Pol der Zellengruppe B zum Anschlusskontakt X2 wird später erklärt.

Figur 7 zeigt die Unterseite des Staubsaugers. Dort ist das geöffnete Aufnahmefach 7 erkennbar, in das das Akkumulatorpaket 8 eingelegt wird. Zur elektrischen Kontaktierung des Pakets 8 mit dem Elektromotor ist ein Stecker 19 vorgesehen, der durch Einiegen des Pakets 8 mit der Steckeraufnahme 13 in Eingriff kommt. Aus Figur 6 ist ersichtlich, dass an dem Stecker 19 zwei Brücken 20 und 21 angeordnet sind, die den Kontakt X1 mit X7 und den Kontakt X2 mit X8 verbinden. Hierdurch werden alle drei Zellengruppen A bis C in Reihe geschaltet, so dass zwischen den Leitungen Y3 und Y4 die Gesamtspannung von 100,8 Volt anliegt. Durch die Brücken 20 und 21 wird erreicht, dass erst nach der Verbindung des Steckers 19 mit der Steckeraufnahme 13 eine Spannung hergestellt wird, die höher als die Sicherheitskleinspannung von 42 Volt ist.

Weitere Voraussetzung für das Anliegen der Spannung am Elektromotor ist das Schließen des Schalters 16. Dies muss vom Endbenutzer durch Drehen der Stellschraube 22 am Deckel 23 des Aufnahmefachs 7 (siehe Figur 4) vorgenommen werden. Damit wird erst nach dem Transport vom Herstellerwerk zum Endbenutzer die elektrische Trennung der Zellengruppen B und C (in Reihe) von der Zellengruppe A aufgehoben. Somit sind die Transportsvorschriften für Gefahrgut auch dann eingehalten, wenn der äquivalente Lithiumgehalt des gesamten Akkumulatorpakets 8 über dem zulässigen Gesamtgewicht von acht Gramm liegt.

### Beispiel:

Der äquivalente Lithiumgehalt (LEC) eines Akkumulatorpakets berechnet sich aus
LEC = 0,3 Q_{Nenn} X N_{Zellen} X Gramm/Amperestunden
mit
Q_{Nenn} = Nennkapazität einer Zelle
N_{Zellen} = Anzahl der Zellen des Akkumulatorpakets

Für ein Paket mit 24 Zellen à 1,6 Amperestunden ergibt sich ein äquivalenter Lithiumgehalt von 11,52 Gramm für das Gesamtpaket und 3,84 Gramm pro Zellengruppe. Durch die elektrische und räumliche Trennung der Zellengruppen B und C von der Gruppe A wird somit ein maximaler äquivalenter Lithiumgehalt von 7,68 Gramm erreicht. Somit wird der Grenzwert von acht Gramm nicht überschritten.

## Patentansprüche

1. Elektrisches Gerät, insbesondere Bodenstaubsauger, mit einem Gehäuse (1), in dem ein Elektromotor und ein aus mehreren Akkumulatorzellen (9, 9.1, 9.2) bestehendes Akkumulatorpaket (8) zu dessen Bestromung angeordnet ist, wobei die Bestromung mit einer Betriebsspannung von mehr als 42 Volt erfolgt, und wobei eine Steckereinrichtung (13, 19) zur elektrischen Kontaktierung des Akkumulatorpakets (8) mit dem Elektromotor vorgesehen ist,
**dadurch gekennzeichnet,**
**dass** die Akkumulatorzellen (9, 9.1, 9.2) derart miteinander elektrisch kontaktiert sind, dass mindestens zwei Zellengruppen (A, B, C) mit einer Zellspannung von weniger als 42 Volt entstehen, und dass die Steckereinrichtung (13, 19) mindestens eine Brückenschaltung (20, 21) beinhaltet, welche beim Herstellen der Kontaktierung des Akkumulatorpakets (8) mit dem Elektromotor die Zellgruppen derart miteinander elektrisch kontaktiert, dass diese die Betriebsspannung von mehr als 42 Volt abgeben.

2. Elektrisches Gerät nach Anspruch 1,
**dadurch gekennzeichnet,**
**dass** die Brückenschaltung (20, 21) in ein nicht am Akkumulatorpaket (8) angeordnetes Teil (19) der Steckereinrichtung (13, 19) integriert ist.

3. Elektrisches Gerät nach Anspruch 2,
**dadurch gekennzeichnet,**
**dass** die Akkumulatorzellen (9, 9.1, 9.2) von einem Akkumulatorgehäuse (10) aufgenommen werden, an dem ein Stecker (19) oder ein Steckergehäuse (13) als Teil der Steckereinrichtung (20, 21) angeordnet ist.

4. Elektrisches Gerät nach mindestens einem der vorhergehenden Ansprüche,
**dadurch gekennzeichnet,**
**dass** in dem Akkumulatorgehäuse (10) ein Temperatursensor (15) angeordnet ist, dessen Anschlussleitungen (18) an Anschlusskontakte (X4, X5) am Stecker (19) oder am Steckergehäuse (13) geführt sind.

5. Elektrisches Gerät nach Anspruch 4,
**dadurch gekennzeichnet,**
**dass** der Temperatursensor (15) in einem Bereich des Akkumulatorgehäuses (10) angeordnet ist, welcher dem Elektromotor am nächsten ist.

6. Elektrisches Gerät nach mindestens einem der vorhergehenden Ansprüche,
**dadurch gekennzeichnet,**
**dass** an dem Akkumulatorgehäuse (10) ein Schalter (16) angeordnet ist, mit dem sowohl die elektrische Kontaktierung des Akkumulatorpakets (8) mit dem Elektromotor als auch die elektrische Kontaktierung von zwei Zellgruppen (A, B) untereinander trennbar ist.

7. Elektrisches Gerät nach mindestens einem der vorhergehenden Ansprüche 3 bis 6,
**dadurch gekennzeichnet,**
**dass** die einzelnen Zellengruppen (A, B, C) innerhalb des Akkumulatorgehäuses (10) durch Zwischenwände (11) voneinander getrennt sind.

## Claims

1. Electrical appliance, in particular a floor-type vacuum cleaner, comprising a housing (1) in which an electric motor and a storage battery pack (8) consisting of a plurality of storage battery cells (9, 9.1, 9.2) for energising said electric motor are arranged, the energisation taking place at an operating voltage of more than 42 volts, and a plug device (13, 19) being provided for electrically contacting the storage battery pack (8) and the electric motor, **characterised in that** the storage battery cells (9, 9.1, 9.2) are electrically contacted with one another in such a way that at least two cell groups (A, B, C) having a cell voltage of less than 42 volts are formed, and **in that** the plug device (13, 19) includes at least one bridge circuit (20, 21) which contacts the cell groups with one another so as to provide the operating voltage of more than 42 volts when producing the contact between the storage battery pack (8) and the electric motor.

2. Electrical appliance according to claim 1, **characterised in that** the bridge circuit (20, 21) is integrated into a part (19) of the plug device (13, 19) which is not arranged on the storage battery pack (8).

3. Electrical appliance according to claim 2, **characterised in that** the storage battery cells (9, 9.1, 9.2) are received by a storage battery housing (10) on which a plug (19) or a plug housing (13) is arranged as part of the plug device (20, 21).

4. Electrical appliance according to at least one of the preceding claims, **characterised in that** a temperature sensor (15) is arranged in the storage battery housing (10), connection leads (18) of which temperature sensor are guided to connection contacts (X4, X5) on the plug (19) or on the plug housing (13).

5. Electrical appliance according to claim 4, **characterised in that** the temperature sensor (15) is arranged in a region of the storage battery housing (10) which is closest to the electric motor.

6. Electrical appliance according to at least one of the preceding claims, **characterised in that** a switch (16) is arranged on the storage battery housing (10), by means of which switch the electrical contact between the storage battery pack (8) and the electric motor and the electrical contact between two cell groups (A, B) can be disrupted.

7. Electrical appliance according to at least one of claims 3 to 6, **characterised in that** the individual cell groups (A, B, C) inside the storage battery housing (10) are separated from one another by partition walls (11).

## Revendications

1. Appareil électrique, en particulier aspirateur traineau, avec un carter (1) dans lequel sont disposés un moteur électrique et un bloc d'accumulateur (8), constitué de plusieurs éléments d'accumulateur (9, 9.1, 9.2), pour l'alimentation du moteur électrique, l'alimentation électrique s'effectuant avec une tension de service de plus de 42 volts, et un équipement de connecteur (13, 19) étant prévu pour la mise en contact électrique du bloc d'accumulateur (8) avec le moteur électrique,
**caractérisé en ce que**
les éléments d'accumulateur (9, 9.1, 9.2) sont mis en contact électriquement les uns avec les autres de sorte qu"il est créé au moins deux groupes d'éléments (A, B, C) avec une tension d'élément de moins de 42 volts, et **en ce que** l'équipement de connecteur (13, 19) contient au moins un montage en pont (20, 21) qui, lors de la réalisation de la mise en contact du bloc d'accumulateur (8) avec le moteur électrique, réalise une mise en contact électrique des groupes d'éléments les uns avec les autres de sorte que ceux-ci délivrent la tension de service de plus de 42 volts.

2. Appareil électrique selon la revendication 1,
**caractérisé en ce que**
le montage en pont (20, 21) est intégré dans une partie (19) de l'équipement de connecteur (13, 19) qui n'est pas disposée sur le bloc d'accumulateur (8).

3. Appareil électrique selon la revendication 2,
**caractérisé en ce que**
les éléments d'accumulateur (9, 9.1, 9.2) sont logés dans un carter d'accumulateur (10) sur lequel est disposé un connecteur (19) ou un carter de connecteur (13) en tant que partie de l'équipement de connecteur (20, 21).

4. Appareil électrique selon au moins une des revendications précédentes,
**caractérisé en ce que**,
dans le carter d'accumulateur (10), il est disposé un capteur de température (15) dont les lignes de connexion (18) sont conduites à des contacts de connexion (X4, X5) sur le connecteur (19) ou sur le carter de connecteur (13).

5. Appareil électrique selon la revendication 4,
**caractérisé en ce que**
le capteur de température (15) est disposé dans une zone du carter d'accumulateur (10) qui est la plus proche du moteur électrique.

6. Appareil électrique selon au moins une des revendications précédentes,
**caractérisé en ce que**,
sur le carter d'accumulateur (10), il est disposé un interrupteur (16) avec lequel aussi bien la mise en contact électrique du bloc d'accumulateur (8) avec le moteur électrique que la mise en contact électrique de deux groupes d'éléments (A, B) l'un avec l'autre peuvent être coupées.

7. Appareil électrique selon au moins une des revendications 3 à 6,
**caractérisé en ce que**
les différents groupes d'éléments (A, B, C) à l'intérieur du carter d'accumulateur (10) sont séparés les uns des autres par des cloisons intermédiaires (11).
